Europäisches Patentamt

European Patent Office

Office européen des brevets

(11) Veröffentlichungsnummer: 0 033 902
A2

(12) EUROPÄISCHE PATENTANMELDUNG

(21) Anmeldenummer: 81100606.3

(22) Anmeldetag: 28.01.81

(51) Int. Cl.³: G 01 D 5/245

(30) Priorität: 12.02.80 DE 3005149

(43) Veröffentlichungstag der Anmeldung: 19.08.81
Patentblatt 81/33

(84) Benannte Vertragsstaaten: BE CH FR IT LI

(71) Anmelder: BROWN, BOVERI & CIE Aktiengesellschaft
Mannheim, Kallstadter Strasse 1, D-6800 Mannheim
Käfertal (DE)

(72) Erfinder: Orlowski, Peter, Dipl.-Ing.,
Beethovenstrasse 24, D-6301 Leihgestern (DE)

(74) Vertreter: Kempe, Wolfgang, Dr. et al, c/o Brown, Boveri
& Cie AG Postfach 351, D-6800 Mannheim 1 (DE)

(54) Verfahren zur Überwachung von Impulsfolgen.

(57) Die Erfindung beschreibt ein Verfahren zur Überwachung der Impulszahl periodisch auftretender, durch einen Referenzimpuls getrennter Impulsfolgen bei einem Impulsgeber, insbesondere bei einem inkrementalen Winkelschrittgeber. Erfindungsgemäss geschieht dies so, dass die Impulszahl als Sollwert in einen Zähler eingegeben wird, und die Impulse mit Ablauf der Impulsfolge gezählt werden, dass in einem Vergleicher beim Eintreffen des Referenzimpulses ein Sollwert-Istwert-Vergleich erfolgt, und bei inkorrekter Impulszahl ein Störmeldespeicher gesetzt wird zur Ausgabe eines Störmeldesignals, und dass der Referenzimpuls überwacht wird.

ACTORUM AG

## Verfahren zur Überwachung von Impulsfolgen

Die Erfindung bezieht sich auf ein Verfahren zur Überwachung der Impulszahl periodisch auftretender, durch einen Referenzimpuls getrennter Impulsfolgen bei einem Impulsgeber, insbesondere bei einem inkrementalen Winkelschrittgeber mit mindestens einer Impulsreihe und einstellbarer Impulszahl/Umdrehung.

Durch die zunehmende Automatisierung von Produktionsprozessen in der Industrie und durch die Fertigung von Produkten mit kleinen Fertigungstoleranzen werden steigende Anforderungen an die Regelung und Steuerung der hier verwendeten Antriebe gestellt. Das hat zur Folge, daß die dazu benutzten Lagemeßeinrichtungen genau und sicher funktionieren müssen.

Wegen des vermehrten Einsatzes der digitalen Informationsverarbeitung bei Automatisierungseinrichtungen gewinnen
digitale elektronische Meßeinrichtungen zunehmend an Bedeutung.

Es gibt absolute und inkrementale Verfahren, nach denen
digitale Meßeinrichtungen arbeiten.

Die inkrementale Meßeinrichtung arbeitet mit einem inkrementalen Maßstab, der die Meßstrecke in gleich große
Wegelemente unterteilt. Der Aufnehmer signalisiert jedes
Wegelement. Zur Erzeugung des Meßwertes werden die Impulse
summiert. Die Bildung eines Richtungssignals (z.B. Drehrichtung) geschieht durch zwei um 90° el. gegeneinander
versetzte Impulsreihen, die in einer logischen Schaltung
ausgewertet werden.

Inkrementale Meßeinrichtungen werden vielfältig eingesetzt
so z.B. in der Stahlindustrie bei Oberwalzenanstellungen
und Verschiebern an Walzgerüsten, der Steuerung von Sägen
und Scheren.

Inkrementale Meßeinrichtungen sind einfach und preiswert
im Aufbau und in der Anwendung. Sie haben aber den Nachteil,
daß sie sehr empfindlich sind gegenüber Störimpulsen, die
bsw. über die Stromversorgung in die Zählerschaltung gelangen können und den Zähler weiterschalten, so daß es zu
Fehlmessungen kommt.

Es sind inkrementale Winkelschrittgeber mit zwei Impulsreihen bekanntgeworden, bei denen nur der Ausfall einer
Impulsreihe erkannt wird, Störungen bei der Impulsreihenbildung aber, wie das Fehlen von Impulsen oder das Auftreten zusätzlicher Impulse in einer Impulsreihe, nicht
erfaßt werden. Die Erfassung derartiger Fehler ist aber

0033902

besonders wichtig. So ist bsw. die sichere Funktion einer Walzwerksanlage von der einwandfreien Erfassung der Drehzahl, der Geschwindigkeit, sowie des Weges und des Bunddurchmessers abhängig, wobei die einzelnen Kriterien mit Hilfe von inkrementalen Winkelschrittgebern erfaßt werden.

Der Erfindung liegt die Aufgabe zugrunde, Störungen bei Impulsgebern infolge inkorrekter Impulszahl zu vermeiden, und damit die Funktionssicherheit der Impulsgeber zu verbesseren.

Diese Aufgabe wird erfindungsgemäß dadurch gelöst, daß die Impulszahl als Sollwert in einen Zähler eingegeben wird, und die Impulse mit Ablauf der Impulsfolge gezählt werden, daß in einem Vergleicher beim Eintreffen des Referenzimpulses ein Sollwert - Istwert - Vergleich erfolgt, und bei inkorrekter Impulszahl ein Störmeldespeicher gesetzt wird zur Ausgabe eines Störmeldesignales, und daß der Referenzimpuls überwacht wird.

Eine zweckmäßige Weiterbildung der Erfindung besteht darin, daß zum Zählen der Impulse zweier Impulsreihen ein Zähler zyklisch an eine erste Impulsreihe angeschaltet wird, und danach an eine zweite Impulsreihe, und daß die Umschaltung durch den Referenzimpuls erfolgt.

Eine weitere sinnvolle Ausbildung der Erfindung besteht darin, daß zum Zählen der Impulse die Impulsfolgen zweier Impulsreihen alternierend in einen Vorwärts - Rückwärts - Zähler eingegeben, und mit dem Referenzimpuls abgefragt werden.

Die mit der Erfindung erzielten Vorteile bestehen insbesondere darin, daß mit einfachen Mitteln die Funktionssicherheit des inkrementalen Impulsgebers verbessert wurde, so daß diese Impulsgeber auch für Meßaufgaben herangezogen werden können, wie sie sonst nur von Impulsgebern mit höherem technischen Aufwand bewältigt werden.

Zwei Ausführungsbeispiele der Erfindung sind in der Zeichnung dargestellt und werden im folgenden näher beschrieben.

Es zeigt:

Fig. 1    ein Impulsdiagramm eines inkrementalen Winkelschrittgebers;

Fig. 2    ein Blockschaltbild einer Einrichtung zur Überwachung der Impulszahl eines inkrementalen Winkelschrittgebers nach Fig. 1;

Fig. 3    ein Blockschaltbild analog Fig. 2 mit zwei Zählern und einem zusätzlichen Taktgeber.

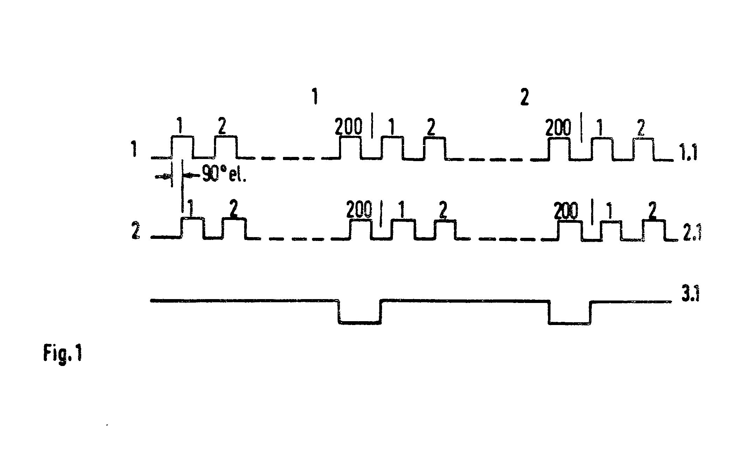

Gemäß dem Impulsdiagramm nach Fig. 1 für einen inkrementalen Winkelschrittgeber sind die Impulsreihen 1 und 2, einer Spur 1.1 bzw. 2.1 zugeordnet, während sich auf einer dritten Spur 3.1 der Referenzimpuls (Nullimpuls) befindet. Jede Impulsreihe besteht aus Impulsfolgen mit bsw. einer Impulszahl von 200 Impulsen/Umdrehung der Impulsscheibe des inkrementalen Winkelschrittgebers. Zur Bildung eines Richtungssignals (z.B. Drehrichtung) werden die Impulsreihen 1 und 2 um 90° el. gegeneinander versetzt und in einer logischen Schaltung ausgewertet.

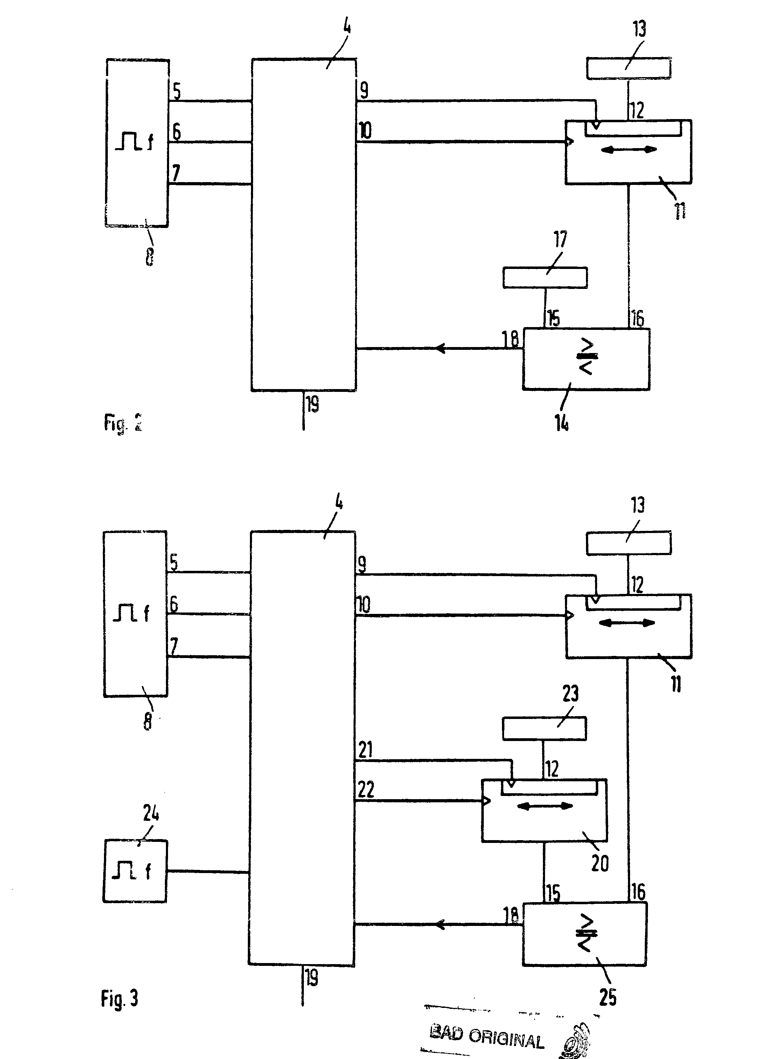

In dem in Fig. 2 dargestellen Blockschaltbild ist ein inkrementaler Winkelschrittgeber 8 über die Ausgänge 5, 6, 7 mit einer Steuerlogik 4 verbunden. Die Ausgänge 9, 10 der Steuerlogik sind auf einen Zähler 11 geführt, an dem über einen Eingang 12 ein Festwertspeicher 13 angeschlossen ist. Ein Größer-Kleiner-Vergleicher 14 ist über seinen Eingang 16 mit dem Zähler 11, und über seinen Eingang 15 mit einem Festwertspeicher 17 für Fehlergrenzen, verbunden. Der Ausgang 18 des Größer-Kleiner-Vergleichers ist auf die Steuerlogik 4 zurückgeführt.

Die Steuerlogik 4 enthält, nicht näher dargestellt u.a. einen Störmeldespeicher, zwei Speicher zum Ausblenden einer ersten, unvollständigen Impulsfolge innerhalb eines Messzyklus sowie eine logische Verknüpfung für die Steuersignale des Zählers 11.

Die vorgenannte Schaltungsanordnung funktioniert wie folgt:
Die einstellbare Impulszahl/Umdrehung des inkrementalen Winkelschrittgebers 8 von bsw. 200 Impulsen wird in den Zähler 11 eingegeben. Mit den Impulsen der Impulsreihe 1 auf der Spur 1.1 zählt dann der Zähler 11 rückwärts. Beim Eintreffen des Nullimpulses am Ende der Umdrehung der Impulsscheibe des Winkelschrittgebers, wird der Zähler gestoppt, und der Zählerstand mit der einstellbaren Fehlergrenze eines Festwertspeichers 17 verglichen. Wurde die Fehlergrenze nicht eingehalten, dann gibt die Steuerlogik 4 über ihren Ausgang 19 ein Störmeldesignal aus.

Der Zähler 11 wird neu gesetzt, und es beginnt der nächste Zyklus mit der Zählung der Impulse der Impulsreihe 2 auf der Spur 2.1. Es wird also die Impulszahl der Impulsreihen 1 und 2 bei jeder zweiten Umdrehung der Impulsscheibe des Winkelschrittgebers überwacht.

Die Überwachung des Nullimpulses geschieht bei jeder Umdrehung der Impulsscheibe des Winkelschrittgebers mit Hilfe eines Zeitgliedes. Erfolgt nach der eingestellten Zeit kein Nullimpuls, dann gibt die Steuerlogik 4 über den Ausgang 19 ebenfalls ein Störmeldesignal aus. Für den nächsten Zyklus wird das Zeitglied neu gestartet. Bei Drehrichtungswechsel wird die Überwachung ausgeblendet.

0033902

Ein weiteres Ausführungsbeispiel ist in Fig. 2 dargestellt. Das Blockschaltbild ist analog dem Blockschaltbild nach Fig. 1 aufgebaut. An die Stelle des Festwertspeichers 17 tritt hier ein zweiter Zähler 20, der mit der Steuerlogik 4 über die Ausgänge 21, 22 verbunden ist, und dessen Ausgang auf den Eingang 15 des Größer-Kleiner-Vergleichers 25 geführt ist. Desweiteren ist die Steuerlogik 4 eingangsseitig mit einem Taktgeber 24 verbunden, der aus einem quarzgesteuerten Oszillator besteht, und zur Erzeugung des Referenzimpulses dient.

Der Messzyklus zur Zählung der Impulse kann auf zweifache Weise erfolgen:
Zum einen sind den Impulsreihen 1 und 2 bzw. Spuren 1.1 und 2.1 des Winkelschrittgebers jeweils ein Zähler 11 bzw. Zähler 20 zugeordnet, in welche die Impulsfolgen gezählt werden. Bei Erscheinen des Referenzimpulses werden beide Zählerstände in dem Größer-Kleiner-Vergleicher 25 miteinander verglichen, und bei Ungleichheit eine Störsignal über den Ausgang 19 der Steuerlogik 4 ausgegeben.

Zum anderen wird für die Impulsreihen 1 und 2 bzw. Spuren 1.1 und 2.1. des Winkelschrittgebers nur ein Zähler verwendet, und eine Überwachung der Impulsfolgen so erfolgt, in dem der Zähler zyklisch eine Impulsfolge der Impulsreihe 1 vorwärts zählt und anschließend die folgende Impulsfolge der Impulsreihe 2 rückwärts zählt, so daß bei Erscheinen des Referenzimpulses aus dem Taktgeber 24 und korrekter Impulszahl, der Zähler den Zählerstand Null aufweist. Abweichungen hiervon lösen wieder einen Störimpuls über den Ausgang 19 der Steuerlogik 4 aus.

Die vorgenannten Schaltungsanordnungen funktioniern unabhängig von der Größe der Frequenz der zu überwachenden Impulsfolgen.

504/80

0033902
7. 2. 1980
ZFE/P2-Du/Br

A n s p r ü c h e

1. Verfahren zur Überwachung der Impulszahl periodisch auftretender, durch einen Referenzimpuls getrennter Impulsfolgen bei einem Impulsgeber, insbesondere bei einem inkrementalen Winkelschrittgeber mit mindestens einer Impulsreihe und einstellbarer Impulszahl/Umdrehung, dadurch gekennzeichnet, daß die Impulszahl als Sollwert in einen Zähler eingegeben wird, und die Impulse mit Ablauf der Impulsfolge gezählt werden, daß in einem Vergleicher beim Eintreffen des Referenzimpulses ein Sollwert - Istwert - Vergleich erfolgt, und bei inkorrekter Impulszahl ein Störmeldespeicher gesetzt wird zur Ausgabe eines Störmeldesignales, und daß der Referenzimpuls überwacht wird.

2. Verfahren nach Anspruch 1, dadurch gekennzeichnet, daß zum Zählen der Impulse zweier Impulsreihen ein Zähler zyklisch zuerst an eine erste Impulsreihe (1) angeschaltet wird, und danach an eine zweite Impulsreihe (2), und daß die Umschaltung durch den Referenzimpuls erfolgt.

3. Verfahren nach Anspruch 1, dadurch gekennzeichnet, daß zum Zählen der Impulse zweier Impulsreihen jeder Impulsreihe ein Zähler zugeordnet ist, und daß jeder Zähler durch einen Referenzimpuls abgefragt wird.

4. Verfahren nach Anspruch 1, dadurch gekennzeichnet, daß zum Zählen der Impulse die Impulsfolgen zweier Impulsreihen alternierend in einen Vorwärts - Rückwärts - Zähler eingegeben, und mit dem Referenzimpuls abgefragt werden.

0033902

5. Schaltungsanordnung für ein Verfahren nach Anspruch 1, dadurch gekennzeichnet, daß die Ausgänge (5, 6, 7) eines Winkelschrittgebers (8) auf eine Steuerlogik (4) geführt, und die Ausgänge (9, 10) der Steuerlogik (4) mit einem Zähler (11) verbunden sind, daß über einen Eingang (12) ein Festwertspeicher (13) an den Zähler (11) angeschlossen ist, daß ein Größer-Kleiner-Vergleicher (14) mit einem ersten Eingang (16) mit dem Zähler (11), und mit einem zweiten Eingang (15) mit einem Festwertspeicher (17) verbunden ist, und daß der Ausgang (18) des Größer-Kleiner-Vergleichers (14) auf die Steuerlogik (4) zurückgeführt ist.

0033902

Fig. 1

0033902

Fig. 2

Fig. 3